# EUROPEAN PATENT SPECIFICATION

(11) **EP 1 138 721 B1**
(45) Date of publication and mention of the grant of the patent: **17.09.2008**
(21) Application number: 01302971.5
(22) Date of filing: 29.03.2001
(51) Int. Cl.: C08L 95/00

(54) **Production of bituminous asphalt**
Herstellung von Asphalt auf Basis von Bitumen
Production d'asphalte à base de bitume

(30) Priority: 01.04.2000 GB 0008042
(43) Date of publication of application: 04.10.2001
(73) Proprietor: Asphalt & Mineral Development Company Limited, Kinross KY13 8QS (GB)
(72) Inventor: Pearse, James Joseph, Kinross KY13 8QS (GB)
(74) Representative: McKay, Jacqueline Anne

(56) References cited:
- EP-A- 0 810 276
- WO-A-96/41839
- WO-A-99/64517
- US-A- 4 832 497

## Description

This invention relates to a production process and apparatus for producing bituminous asphalt suitable for use in highway construction works, parking areas, and similar applications.

Highway grade asphalt is used extensively for paving and road making. Generally, highway asphalt is a mixture of asphaltic bitumen and aggregate, namely stone chippings, sand and/or dust, and fillers such as limestone powder. Producing asphalt by known processes involves heating the bitumen to temperatures in excess of 150 degrees Celsius; and heating the aggregate to temperatures in excess of 200 degrees Celsius. Heating the constituents is expensive both in terms of the amount of fuel required, with concomitant depletion of valuable resources, and in monetary terms, and the whole process is environmentally unfriendly in that it produces carbon monoxide and sulphur dioxide and contributes to air pollution; and pollutes the atmosphere with dust and noise.

Conventional asphalt has to be transported and laid while still hot. There are known asphaltic substances which can be stored and subsequently transported and laid while cold, but these do not provide the strength required for vehicle highway use, and can only be used on low-load areas such as footpaths and minor carriageways.

Published International Patent Application WO96/41839 describes a method of producing bituminous asphalt which can be transported and laid while cold and which is stated to be of sufficient strength for highway use. In the process described, one or both of separate bodies of coarse and fine aggregates are given a preliminary coating of bitumen, and these are subsequently mixed together and with a bitumen emulsion. The preliminary coating is applied in the preferred embodiment by use of hot bitumen, although the use of bitumen emulsion for this step is also described.

This prior art proposal has the significant drawback that it requires the use of slow breaking emulsions in the final mixing step, and also in the preliminary coating step if an emulsion is used.
The preliminarily coated material must be left to stand for a period of time before being further processed, and the material as finally mixed must be left to stand for as much as fourteen days before being ready for use. This requires the use of expansive hard-surfaced storage space, makes it impossible to operate on a continuous as opposed to a batch basis, and necessitates production in advance on the basis of anticipated demand.

There is therefore a need for a process and apparatus for producing bituminous asphalt without the input of heat, in a manner which can be operated continuously if desired, and in which the material is ready for use immediately.

The present invention provides a process for the production of asphalt according to claim 1.

Typically, the fine aggregate has a size less than 3.35 mm, and the coarse aggregate has a size in the range 3.35 - 20 mm.

The bitumen emulsion in the final product may suitably amount to 6.8 - 7.5% by weight.

The bitumen used in the emulsion mixture preferably has a penetration grade between 35 and 450, and the bitumen emulsion preferably has a break index in the range 90 to 130, most preferably between 100 and 120.

A stiffening agent may be added during the final mixing step, according to design requirements, the stiffening agent suitably being one or more materials selected from cement, pulverised fly ash, and hydrated lime and added in the amount of 1.0 to 2.0% by weight of the final mix.

The coated fine and coarse aggregates may be stored prior to final mixing, or alternatively passed immediately to the final mixing step.

At least some of the aggregate used may comprise recycled road surfacing material.

The present invention also provides apparatus for the production of asphalt according to claim 14.

Means may be provided for separating aggregate into fine and coarse fractions and for supplying said fractions to the first and second hoppers respectively.

An embodiment of the invention will now be described, by way of example only, with reference to the accompanying drawings, in which:

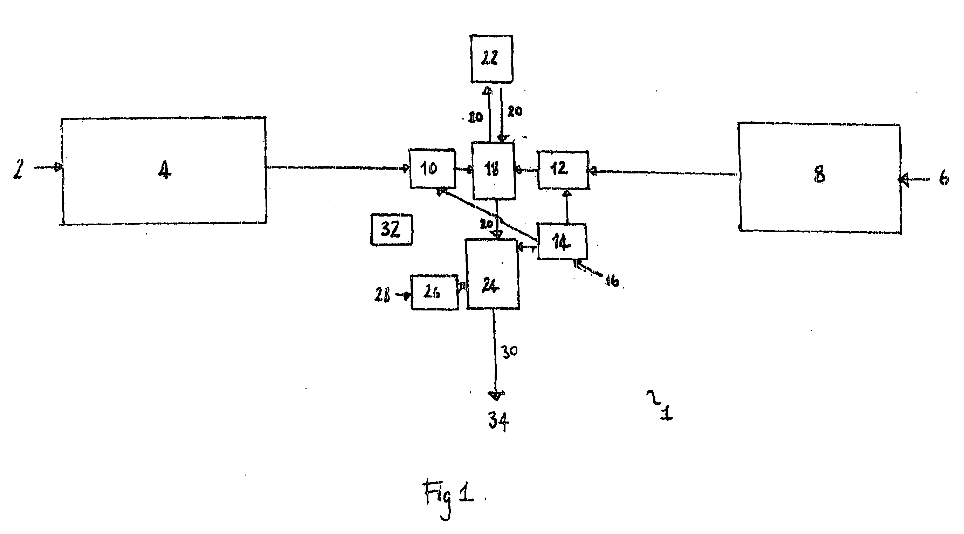

Figure 1 is a schematic block diagram of the process of the instant invention; and

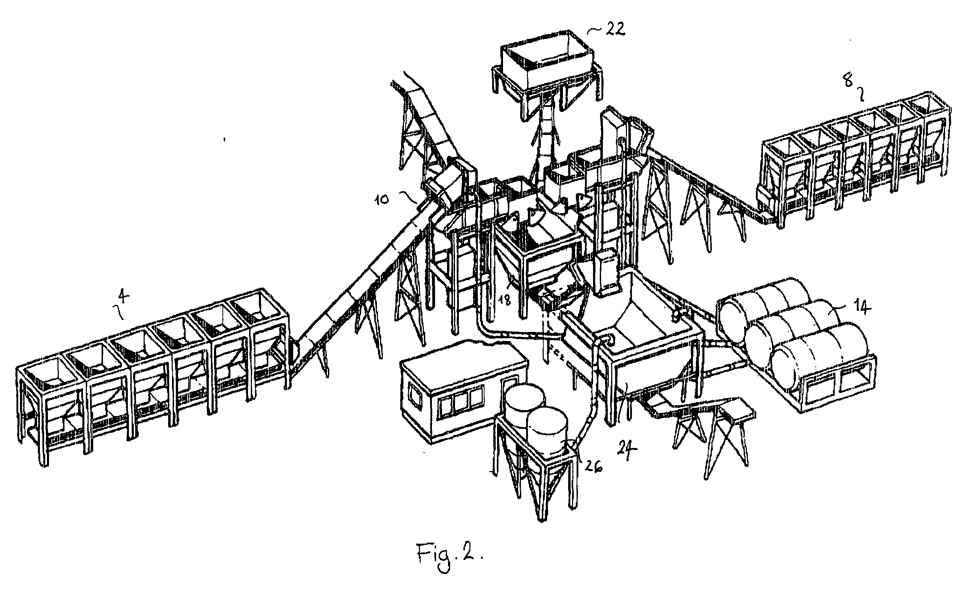

Figure 2 is a pictorial perspective view of one form of plant for implementing the process of Figure 1.

Referring to the drawings, the apparatus 1 comprises feed hoppers 4, 8; storage tanks 14; mixing units 10, 12, 24; and silos 26 adapted to contain additives. Operation of the apparatus is controlled from a plant control cabin 32. The apparatus optionally comprises means to facilitate introduction of recycled aggregate.

The process of the invention for producing asphalt firstly comprises the step of obtaining aggregate, namely a mixture either sand, gravel or crushed rock. Some of the aggregate may be recycled material.

Each batch of asphalt is made to a specific recipe, and the ingredients and their relative proportions conform to the recipe. In the embodiment described, the grades used are coarse aggregate and fine aggregate (BS 594 and BS 4987 refer). The relative percentages of coarse and fine aggregate required for the process are determined by the use to which the asphalt is to be put. That is, in the embodiment described, which is a process for producing asphalt for road making, the relative proportions of coarse and fine aggregate and bitumen emulsion can be varied to produce the asphalt mixture required.

The coarse aggregates 2 are introduced into a feed hopper 4 and the fine aggregates 6 are introduced into a separate feed hopper 8.

The coarse aggregates 2 are fed, in the blend required, from the feed hopper 4 into a dedicated mixing unit 10. The apparatus 1 further comprises tanks 14 adapted to contain a bitumen emulsion 16. This emulsion 16 has high bitumen content, in the range 50% to 70%.

The function of the bitumen emulsion 16 is ultimately to bind the aggregates. It is provided in emulsion form to obviate the need to provide heat to enable cohesion of the elements, and can also produce asphalt materials which have extended storage and working life, and consequently far greater flexibility than known hot materials.

The emulsion used is a conventional aqueous emulsion of bitumen with a penetration grade of 35 to 450. The preferred emulsion is a medium breaking emulsion with a break index of about 115 - 120. One suitable example is Nynas E07 bitumen emulsion from Nynas UK AB, Ellesmere Port, South Wirral.

Depending upon the recipe of the asphalt to be produced, the requisite volume of bitumen emulsion 16 is introduced to the mixing unit 10 from the tank 14. In the mixing unit 10, which comprises a twin auger or paddle type mixing unit, the coarse aggregates 2 and the bitumen emulsion 16 are agitated to encourage coating of the surface of the coarse aggregates 2 with the emulsion 16. The agitation process is conducted at substantially ambient temperature. As one example, the emulsion is added in the amount of 2.5 wt % and mixed for 45 seconds.

Simultaneously, the fine aggregates 6, in the blend required, are introduced from the feed hopper 8 into a dedicated mixing unit 12.

Depending upon the recipe of the asphalt to be produced, the requisite volume of bitumen emulsion 16 is introduced to the mixing unit 12 from the tank 14. In the mixing unit 12, which comprises a twin auger or paddle type mixing unit, the fine aggregates 6 and the bitumen emulsion 16 are agitated to encourage coating of the surface of the fine aggregates 6 with the emulsion 16. The agitation process is conducted at substantially ambient temperature. As one example, the emulsion is added in the amount of 5.0 wt % and mixed for 45 seconds.

The coarse and fine aggregates, now with a preliminary coating of bitumen emulsion 16, are simultaneously discharged from their respective mixing units 10,12 to a feed bin 18, to provide a mixture of coated aggregates 20.

If it is not required that the asphalt be manufactured immediately the mixture of preliminarily coated aggregates 20 is conveyed to a storage unit 22. This coated mixture 20 is stockpiled for future use.

Otherwise, the mixture of coated coarse and fine aggregates 20 is conveyed directly from the mixing units 10,12 through the feed bin 18 to a further, final, mixing unit 24. Alternatively, when required, the mixture 20 is introduced from the storage unit 22 to the feed bin 18 and from there to the further mixing unit 24.

A further amount of bitumen emulsion 16 is introduced to the mixing unit 24, which comprises a twin auger or paddle type mixing unit, from the tank 14, and the combined aggregates 20 are then agitated to mix the combined aggregates 20 with the bitumen emulsion 16. The agitation process is conducted at substantially ambient temperature. The amount of bitumen emulsion 16 introduced depends upon on the recipe for the asphalt being produced, but will typically be 4.0 wt %, and the mixing will be for 50 - 60 sec.

Some recipes for asphalt, depending upon the purpose for which it is to be put, require the addition of a strengthening or stiffening agent 28. If required, this is supplied to the mixing unit 24 from tanks 26. Examples of suitable strengthening or stiffening agents are cement, pulverised fuel ash, granulated slag, limestone powder, hydrated lime, a combination of any or all of the aforementioned materials or other materials with a broadly similar effect.

The product of the mixing unit 24 is asphalt 30. The asphalt 30 is discharged from the mixing unit 24 into a vehicle 34 either for transportation to site for immediate use, or for removal to a storage location.

The storage location provides a hard surface such as concrete or asphalt on which the asphalt 30 can be stockpiled, and provides protection for the asphalt 30 from the weather. The asphalt 30 subject to type can have a shelf life of approximately two weeks from manufacture, depending on the type of asphalt 30 produced by the process, and depending on the requirements of the user. This has the added advantage that the asphalt 30 need not be manufactured at the time when it is needed, which is the case with known hot bitumen processes and obviously provides logistical difficulties.

Specific examples of materials made in accordance with the invention will now be described.

A number of samples were made by the above process, using a 20 mm nominal size macadam as the base mixture and incorporating stiffening agents in different combinations and quantities. The analysis of the mixed materials was a follows:
aggregate particles passing 20 mm sieve 98%
aggregate particles passing 3.35 mm sieve 35%
bitumen content (50 penetration grade)4.0-4.5%
stiffening agents (cement, PFA and
   hydrated lime) 1.0-2.0%
total emulsion content 6.7-7.5%

The bitumen emulsion used had a break index of 118.

The coarse and fine aggregates were separately mixed with the bitumen emulsion as described above and then the combined pre-mixed materials were immediately introduced into the final mixing process when both a stiffening agent as required and the balance of the bitumen emulsion were added.

Final mixing of all the constituents was then carried out for 50-60 seconds per batch and the mixed material was discharged. A time interval of 2 hours was allowed (to replicate haulage time to site) before the material was utilised to form Marshall specimens and compacted with a standard Marshall Hammer, giving 50 blows to each side of the sample.

Each set of samples was tested for its dynamic stiffness modulus using the Indirect Tensile Stiffness Modulus (ITSM) mode. The tests were carried out after 7, 28 and 91 days at 20 degrees Celsius, and in accordance with BSI DD213:1993 using a standard Nottingham Asphalt Tester. Testing was carried out at Advanced Pavement Technology Centre, Heriot-Watt University, Edinburgh.

For comparative purposes, a sample of 20 mm nominal size hot mix material was also tested, using similar coarse and fine aggregates and hot bitumen binder. The results are summarised in the following table showing stiffness modulus in MPa:

**TABLE 1**

| Sample | 7 days | 28 days | 91 days |
|---|---|---|---|
| 1 | 626 MPa | 635 MPa | 557 MPa |
| 2 | 1842MPa | 2098MPa | 2278Mpa |
| 3 | 1823MPa | 2105MPa | 2363MPa |
| 4 | 663MPa | 911MPa | 1316MPa |
| 5 | 3021MPa | 3792MPa | 4498MPa |
| Hot mix | | | |
| (conventional) | 2200MPa | 2200MPa | N/A |

As can be seen, the mixtures produced by the invention are capable of producing a variety of stiffness values depending on the type and quantity of stiffening agent added.

Thus this invention provides a two-stage process for the manufacture of asphalt in which the second stage can optionally be carried out after a considerable time interval, providing flexibility and convenience.

With the present invention, there is no requirement for the large amounts of fuel used in known processes for manufacturing asphalt. The dust, noise, heat and pollution produced during known manufacturing processes are also absent. That is, this invention provides a process and apparatus that is quicker, cheaper and more environmentally friendly than those which are known, and which can also provide a product which has major benefits in having a substantial shelf-life prior to use. For maximum shelf-life, the formulation required may result in a lower stiffness but one which s still suitable for lower stiffness requirement areas such as footways and minor carriageways.

Health and safety risks are greatly reduced by this process and apparatus that eliminates hot processes, eliminates the need to work with high temperature materials, and that provides a process plant having low risk activities.

This invention obviates the need for the numerous hot process plants that are necessary for known processes for producing highway asphalt, and consequently both has substantial economic benefits, and provides major environmental improvements.

Improvements and modifications can be made to the above without departing from the scope of the invention as defined in the appended claims.

## Claims

1. A process for the production of asphalt (30), comprising the steps of:
providing a quantity of fine aggregate (6);
mixing the fine aggregate (6) with a bitumen emulsion (16) to form coated fine aggregate (6);
providing a quantity of coarse aggregate (2);
mixing the coarse aggregate (2) with a bitumen emulsion (16) to form coated coarse aggregate (2);
mixing the coated fine aggregate (6) and the coated coarse aggregate (2) together with the addition of further bitumen emulsion (16)
**characterised in that**
before the final mixing step where the coated fine aggregate (6) and the coated coarse aggregate (2) are mixed together with the addition of further bitumen emulsion (16), the coated fine aggregate (6) and the coated coarse aggregate (2) are simultaneously discharged from their respective mixing units (10, 12) to a feed bin (18) and
directly conveyed from the feed bin (18) to an additional mixing unit (24) for the final mixing step to form asphalt ready for use.

2. The process of claim 1, in which the fine aggregate (6) has a size less than 3.35 mm, and the coarse aggregate (2) has a size in the range 3.35 - 20 mm.

3. The process of claim 1 or claim 2, in which the bitumen emulsion (16) in the final product amounts to 6.7 - 7.5% by weight.

4. The process of any preceding claim, in which the fine aggregate (6) is mixed with 4.5-5.5% by weight of bitumen emulsion (16).

5. The process of any preceding claim, in which the coarse aggregate (2) is mixed with 2.0-3.0% by weight of bitumen emulsion (16).

6. The process of any preceding claim, in which the bitumen content of the emulsion (16) has a penetration grade between 35 and 450.

7. The process of claim 6, in which the bitumen emulsion (16) has a break index in the range 90 to 130.

8. The process of claim 7, in which the break index is between 100 and 120.

9. The process of any preceding claim, in which the bitumen emulsion (16) comprises 50-70% by weight of bitumen.

10. The process of any preceding claim, in which a stiffening agent (28) is added during the final mixing step.

11. The process of claim 10, in which the stiffening agent (28) is one or more materials selected from cement, pulverised fly ash, and hydrated lime.

12. The process of claim 10 or claim 11, in which the stiffening agent (28) is added in the amount of 1.0 to 2.0% by weight of the final mix.

13. The process of any preceding claim, in which at least some of the aggregate used comprises recycled road surfacing material.

14. Apparatus for the production of asphalt (30), comprising:
storage tank means (14) for bitumen emulsion (16);
a first hopper (8) for storing fine aggregate (6);
a second hopper (4) for storing coarse aggregate (2); and
a first mixing unit (12) for mixing fine aggregate (6) received from the first hopper (8) with bitumen emulsion (16) from said storage tank means (14) to produce coated fine aggregate (6);
**characterised in that** the apparatus further comprises:
a second mixing unit (10) for mixing coarse aggregate (2) received from the second hopper (4) with bitumen emulsion (16) from said storage tank means (14) to produce coated coarse aggregate (2);
a feed bin (18) to receive the coated fine aggregate (6) and the coated coarse aggregate (2) when they are simultaneously discharged from their respective mixing units (10,12) and
a third mixing unit (24) for mixing the coated fine aggregate (6) and the coated coarse aggregate (2) received from the feed bin (18) with bitumen emulsion (16) from said storage tank means (14) to provide asphalt ready for laying.

15. Apparatus according to claim 14, including means for separating aggregate into fine and coarse fractions and for supplying said fractions to the first and second hoppers (8) and (4) respectively.

## Patentansprüche

1. Ein Vorgang zur Herstellung von Asphalt (30), der die folgenden Schritte beinhaltet:
Bereitstellen einer Menge an feinkörnigem Zuschlag (6);
Mischen des feinkörnigen Zuschlags (6) mit einer Bitumenemulsion (16), um einen beschichteten feinkörnigen Zuschlag (6) zu bilden;
Bereitstellen einer Menge an grobkörnigem Zuschlag (2);
Mischen des grobkörnigen Zuschlags (2) mit einer Bitumenemulsion (16), um einen beschichteten grobkörnigen Zuschlag (2) zu bilden;
Mischen des beschichteten feinkörnigen Zuschlags (6) und des beschichteten grobkörnigen Zuschlags (2) mit der Zugabe weiterer Bitumenemulsion (16),
**dadurch gekennzeichnet, dass**
vor dem letzten Mischschritt, bei dem der beschichtete feinkörnige Zuschlag (6) und der beschichtete grobkörnige Zuschlag (2) mit der Zugabe weiterer Bitumenemulsion (16) gemischt werden, der beschichtete feinkörnige Zuschlag (6) und der beschichtete grobkörnige Zuschlag (2) gleichzeitig aus ihren entsprechenden Mischanlagen (10, 12) in einen Vorratsbunker (18) abgelassen werden und
für den letzten Mischschritt von dem Vorratsbunker (18) direkt zu einer zusätzlichen Mischanlage (24) befördert werden, um gebrauchsfertigen Asphalt zu bilden.

2. Vorgang gemäß Anspruch 1, bei dem der feinkörnige Zuschlag (6) eine Größe von weniger als 3,35 mm aufweist und der grobkörnige Zuschlag (2) eine Größe im Bereich von 3,35-20 mm aufweist.

3. Vorgang gemäß Anspruch 1 oder Anspruch 2, bei dem die Bitumenemulsion (16) in dem Endprodukt 6,7-7,5 Massenanteile in Prozent beträgt.

4. Vorgang gemäß einem der vorhergehenden Ansprüche, bei dem der feinkörnige Zuschlag (6) mit 4,5-5,5 Massenanteilen in Prozent an Bitumenemulsion (16) gemischt wird.

5. Vorgang gemäß einem der vorhergehenden Ansprüche, bei dem der grobkörnige Zuschlag (2) mit 2,0-3,0 Massenanteilen in Prozent an Bitumenemulsion (16) gemischt wird.

6. Vorgang gemäß einem der vorhergehenden Ansprüche, bei dem der Bitumengehalt der Emulsion (16) einen Tränkungsgrad zwischen 35 und 450 aufweist.

7. Vorgang gemäß Anspruch 6, bei dem die Bitumenemulsion (16) einen Bruchindex im Bereich von 90 bis 130 aufweist.

8. Vorgang gemäß Anspruch 7, bei dem der Bruchindex zwischen 100 und 120 liegt.

9. Vorgang gemäß einem der vorhergehenden Ansprüche, bei dem die Bitumenemulsion (16) 50-70 Massenanteile in Prozent an Bitumen beinhaltet.

10. Vorgang gemäß einem der vorhergehenden Ansprüche, bei dem während des letzten Mischschritts ein Versteifungsmittel (28) zugegeben wird.

11. Vorgang gemäß Anspruch 10, bei dem das Versteifungsmittel (28) ein oder mehrere Materialien ist, die aus Zement, pulverisierter Flugasche und Kalkhydrat ausgewählt werden.

12. Vorgang gemäß Anspruch 10 oder Anspruch 11, bei dem das Versteifungsmittel (28) in der Menge von 1,0 bis 2,0 Massenanteilen in Prozent der Endmischung zugegeben wird.

13. Vorgang gemäß einem der vorhergehenden Ansprüche, bei dem mindestens ein Teil des verwendeten Zuschlags recycelter Straßenbelag beinhaltet.

14. Ein Gerät zur Herstellung von Asphalt (30), das Folgendes beinhaltet:
ein Lagertankmittel (14) für die Bitumenemulsion (16);
einen ersten Trichter (8) zum Lagern des feinkörnigen Zuschlags (6);
einen zweiten Trichter (4) zum Lagern des grobkörnigen Zuschlags (2); und
eine erste Mischanlage (12) zum Mischen des feinkörnigen Zuschlags (6), der aus dem ersten Trichter (8) erhalten wird, mit der Bitumenemulsion (16) aus dem Lagertankmittel (14), um einen beschichteten feinkörnigen Zuschlag (6) herzustellen;
**dadurch gekennzeichnet, dass** das Gerät ferner Folgendes beinhaltet:
eine zweite Mischanlage (10) zum Mischen des grobkörnigen Zuschlags (2), der aus dem zweiten Trichter (4) erhalten wird, mit der Bitumenemulsion (16) aus dem Lagertankmittel (14), um einen beschichteten grobkörnigen Zuschlag (2) herzustellen;
einen Vorratsbunker (18), um den beschichteten feinkörnigen Zuschlag (6) und den beschichteten grobkörnigen Zuschlag (2) zu erhalten, wenn sie gleichzeitig aus ihren entsprechenden Mischanlagen (10, 12) abgelassen werden, und
eine dritte Mischanlage (24) zum Mischen des beschichteten feinkörnigen Zuschlags (6) und des beschichteten grobkörnigen Zuschlages (2), die aus dem Vorratsbunker (18) erhalten werden, mit der Bitumenemulsion (16) aus dem Lagertankmittel (14), um verlegungsfertigen Asphalt bereitzustellen.

15. Gerät gemäß Anspruch 14, das ein Mittel zum Trennen des Zuschlags in feinkörnige und grobkörnige Anteile und zum Liefern der Anteile an den ersten und den zweiten Trichter (8) bzw. (4) umfasst.

## Revendications

1. Un procédé pour la production d'asphalte (30), comprenant les étapes de :
fourniture d'une quantité d'agrégat fin (6) ;
mélange de l'agrégat fin (6) avec une émulsion de bitume (16) pour former un agrégat fin enrobé (6) ;
fourniture d'une quantité d'agrégat grossier (2) ;
mélange de l'agrégat grossier (2) avec une émulsion de bitume (16) pour former un agrégat grossier enrobé (2) ;
mélange de l'agrégat fin enrobé (6) et de l'agrégat grossier enrobé (2) ensemble avec l'ajout d'une émulsion de bitume supplémentaire (16)
**caractérisé en ce que**
avant l'étape de mélange finale où l'agrégat fin enrobé (6) et l'agrégat grossier enrobé (2) sont mélangés ensemble avec l'ajout d'une émulsion de bitume supplémentaire (16), l'agrégat fin enrobé (6) et l'agrégat grossier enrobé (2) sont simultanément déchargés de leurs unités de mélange respectives (10, 12) dans une benne d'alimentation (18) et acheminés directement de la benne d'alimentation (18) vers une unité de mélange additionnelle (24) pour l'étape de mélange finale pour former de l'asphalte prêt à être utilisé.

2. Le procédé de la revendication 1, dans lequel l'agrégat fin (6) a une taille inférieure à 3,35 mm, et l'agrégat grossier (2) a une taille comprise dans la gamme allant de 3,35 à 20 mm.

3. Le procédé de la revendication 1 ou de la revendication 2, dans lequel l'émulsion de bitume (16) dans le produit final s'élève à 6,7 à 7,5 % en poids.

4. Le procédé de n'importe quelle revendication précédente, dans lequel l'agrégat fin (6) est mélangé avec 4,5 à 5,5 % en poids d'émulsion de bitume (16).

5. Le procédé de n'importe quelle revendication précédente, dans lequel l'agrégat grossier (2) est mélangé avec 2,0 à 3,0 % en poids d'émulsion de bitume (16).

6. Le procédé de n'importe quelle revendication précédente, dans lequel la teneur en bitume de l'émulsion (16) a un degré de pénétration compris entre 35 et 450.

7. Le procédé de la revendication 6, dans lequel l'émulsion de bitume (16) a un indice de rupture compris dans la gamme allant de 90 à 130.

8. Le procédé de la revendication 7, dans lequel l'indice de rupture est compris entre 100 et 120.

9. Le procédé de n'importe quelle revendication précédente, dans lequel l'émulsion de bitume (16) comprend de 50 à 70 % en poids de bitume.

10. Le procédé de n'importe quelle revendication précédente, dans lequel un agent de renforcement (28) est ajouté au cours de l'étape de mélange finale.

11. Le procédé de la revendication 10, dans lequel l'agent de renforcement (28) est un ou plusieurs matériaux sélectionnés parmi le ciment, les cendres volantes pulvérulentes, et la chaux hydratée.

12. Le procédé de la revendication 10 ou de la revendication 11, dans lequel l'agent de renforcement (28) est ajouté dans la quantité allant de 1,0 à 2,0 % en poids du mélange final.

13. Le procédé de n'importe quelle revendication précédente, dans lequel au moins une partie de l'agrégat utilisé comprend du matériau de revêtement de route recyclé.

14. Appareil pour la production d'asphalte (30), comprenant :
un moyen formant réservoir de stockage (14) pour l'émulsion de bitume (16) ;
une première trémie (8) pour stocker l'agrégat fin (6) ;
une deuxième trémie (4) pour stocker l'agrégat grossier (2) ; et
une première unité de mélange (12) pour mélanger l'agrégat fin (6) reçu de la première trémie (8) avec l'émulsion de bitume (16) provenant dudit moyen formant réservoir de stockage (14) pour produire l'agrégat fin enrobé (6) ;
**caractérisé en ce que** l'appareil comprend de plus :
une deuxième unité de mélange (10) pour mélanger l'agrégat grossier (2) reçu de la deuxième trémie (4) avec l'émulsion de bitume (16) provenant dudit moyen formant réservoir de stockage (14) pour produire l'agrégat grossier enrobé (2) ;
une benne d'alimentation (18) pour recevoir l'agrégat fin enrobé (6) et l'agrégat grossier enrobé (2) lorsqu'ils sont simultanément déchargés de leurs unités de mélange respectives (10, 12) et
une troisième unité de mélange (24) pour mélanger l'agrégat fin enrobé (6) et l'agrégat grossier enrobé (2) reçus de la benne d'alimentation (18) avec l'émulsion de bitume (16) provenant dudit moyen formant réservoir de stockage (14) pour produire de l'asphalte prêt à être étendu.

15. Appareil selon la revendication 14, incluant un moyen pour séparer l'agrégat en fractions fine et grossière et pour fournir lesdites fractions aux première et deuxième trémies (8) et (4) respectivement.
